# EUROPÄISCHE PATENTSCHRIFT

(11) **EP 3 867 172 B1**
(45) Veröffentlichungstag und Bekanntmachung des Hinweises auf die Patenterteilung: **13.03.2024**
(21) Anmeldenummer: 19794110.7
(22) Anmeldetag: 18.10.2019
(51) Int. Cl.: B65G 15/14, B67B 3/26

(54) **VORRICHTUNG ZUM TRANSPORT VON STEHENDEN BEHÄLTERN ZWISCHEN KLEMMRIEMEN**
DEVICE FOR TRANSPORTING STANDING CONTAINERS BETWEEN CLAMPING BELTS
DISPOSITIF SERVANT AU TRANSPORT DE CONTENANTS EN POSITION VERTICALE ENTRE DES COURROIES DE SERRAGE

(30) Priorität: 18.10.2018 DE 102018008272
(43) Veröffentlichungstag der Anmeldung: 25.08.2021
(73) Patentinhaber: Heuft Systemtechnik GmbH, 56659 Burgbrohl (DE)
(72) Erfinder: HEUFT, Bernhard, 56659 Burgbrohl (DE); KASDORF, Olga, 34414 Warburg (DE)
(74) Vertreter: Abitz & Partner
(86) Internationale Anmeldenummer: PCT/EP2019/078407
(87) Internationale Veröffentlichungsnummer: WO 2020/079242

(56) Entgegenhaltungen:
- EP-A1- 2 808 275
- WO-A1-99/23480
- US-A1- 2010 115 888

## Beschreibung

Die Erfindung betrifft eine Transportvorrichtung zum Transport von stehenden, einreihig angeordneten Behältern, umfassend einen ersten und einen zweiten Klemmriemen, zwischen denen die einreihig angeordneten Behälter gehalten und transportiert werden. Die Erfindung betrifft auch ein entsprechendes Transportverfahren sowie ein Verfahren zur Überprüfung der Dichtheit von verformbaren, gefüllten Behältern.

Es ist bekannt, in einer Behälterinspektionseinrichtung ein Paar von Klemmriemen gegenüberliegend anzuordnen und verformbare gefüllte Behälter zwischen den Klemmriemen zu fördern. Einen derartigen Riemenantrieb offenbart beispielsweise die DE 297 16 795 U1. Dieser Riemenantrieb kann verwendet werden, um eine Druck- bzw. Dichtigkeitsprüfung von leicht verformbaren Behältern durchzuführen. Zu diesem Zweck werden die Behälter auf einem Transportband geführt und durch die seitlich verlaufenden Riemen unter Druck gesetzt.

Bei derartigen Riemenantrieben werden die Riemen über Schleifleisten geführt, mit denen der benötigte Anpressdruck an die Behälter erzeugt wird. Diese Vorrichtungen haben jedoch den Nachteil, dass es dabei zu relativ starker Reibung zwischen der Rückseite der Antriebsriemen und den Schleifleisten kommt, was sich negativ auf die Lebensdauer der Antriebsriemen auswirkt.

WO 99/23480 A1 offenbart eine Transportvorrichtung zum Transport von stehenden, einreihig angeordneten Behältern, umfassend:
- einen ersten Klemmriemen und einen zweiten Klemmriemen, zwischen denen die einreihig angeordneten Behälter gehalten und transportiert werden,
- einen Drehzylinder, um den die von den Klemmriemen gehaltenen Behälter transportiert werden,
wobei die Behälter und die Klemmriemen so um den Drehzylinder herumgeführt werden, dass die Behälter dabei jeweils von dem radial außen liegenden Klemmriemen an den Drehzylinder gedrückt werden.

Der vorliegenden Erfindung liegt daher die Aufgabe zugrunde, eine Transportvorrichtung der eingangs genannten Art bereitzustellen, die eine erhöhte Lebensdauer gegenüber herkömmlichen Transportvorrichtungen aufweist. Eine weitere Aufgabe der Erfindung besteht auch darin, eine Transportvorrichtung bereitzustellen, die möglichst einfach an unterschiedliche Behältergrößen angepasst werden kann. Eine weitere Aufgabe der Erfindung besteht darin, eine Transportvorrichtung bereitzustellen, die kompakt aufgebaut ist, aber dennoch eine möglichst lange Transportstrecke umfasst, während der die Behälter mit externem Druck beaufschlagt werden können. Erfindungsgemäß wird eine Transportvorrichtung zum Transport von stehenden, einreihig angeordneten Behältern vorgeschlagen. Die Transportvorrichtung umfasst einen ersten Klemmriemen und einen zweiten Klemmriemen, zwischen denen die einreihig angeordneten Behälter gehalten und transportiert werden. Die Transportvorrichtung umfasst ferner mindestens einen ersten und einen zweiten Drehzylinder, um die die von den Klemmriemen gehaltenen Behälter transportiert werden. Die Behälter und die Klemmriemen werden dabei so in Umfangsrichtung um die Drehzylinder herumgeführt, dass die Behälter von dem radial außen liegenden Klemmriemen an den jeweiligen Drehzylinder gedrückt werden. Die beiden Drehzylinder sind in horizontaler Richtung zueinander versetzt angeordnet und die Behälter werden auf einer S-förmigen Transportstrecke um die beiden Drehzylinder herum gefördert.

In der vorliegenden Transportvorrichtung werden die Behälter zwischen den beiden Klemmriemen eingeklemmt und gleichzeitig von dem jeweils radial außenliegenden Klemmriemen an einen der beiden Drehzylinder gedrückt. Dadurch können die Behälter einerseits frei schwebend um die Drehzylinder transportiert werden. Andererseits können die Klemmriemen so gesteuert werden, dass diese auf die transportierten Behälter einen frei wählbaren, vorgegebenen Anpressdruck ausüben. Aus diesem Grund eignet sich die vorliegende Erfindung insbesondere für einen Einsatz in einer Dichtigkeitskontrolle von befüllten verformbaren Behältern, wie PET Flaschen oder Leichtmetall-Dosen. Werden undichte Behälter einem externen Druck ausgesetzt, ist der resultierende Innendruck niedriger als bei dichten Behältern, während der gemessene Füllstand gegenüber dichten Behältern ansteigt. In herkömmlichen Dichtigkeitskontrollen ist die Länge der Druckstrecke aufgrund hoher Reibung zwischen Klemmleisten und Klemmriemen, sowie aufgrund baulicher Gegebenheiten begrenzt. Die vorliegende Erfindung bietet demgegenüber eine Möglichkeit, Druckstrecken reibungsärmer und kompakter aufzubauen, so dass dadurch Druckstrecken mit deutlich erhöhter Länge aufgebaut werden können.

In der vorliegenden Erfindung wird der Druck auf die Behälterwand dadurch erzeugt, dass die verformbaren Behälter aufgrund der Riemenspannung der Klemmriemen an die Drehzylinder gedrückt werden. Dabei kommt es allenfalls zu Rollreibung zwischen den Behältern und den Klemmriemen. Weitergehende Reibung der Klemmriemen zum Beispiel über Schleifleisten und dergleichen wird dagegen vermieden. Dadurch nutzen sich die Klemmriemen weniger ab, und die effektive Lebensdauer der Klemmriemen und die Wartungsintervalle der Transportvorrichtungen können verlängert werden. Vorteilhafterweise werden konventionelle Transporteure verwendet, mit denen die Behälter stehend und einreihig zur erfindungsgemäßen Transportvorrichtung angefördert werden. Als Transporteure können übliche Förderbänder oder Gliederkettenförderer zum Einsatz kommen. Die Behälter können auf dem Transportband zusätzlich oder ausschließlich durch Luftkissen oder Rollen gefördert werden. Auch kann das Transportband als feststehende Platte ausgebildet sein, über die die Behälter durch Staudruck geschoben werden. Die Behälter werden dabei vorzugsweise etwa tangential zu dem ersten Drehzylinder angefördert.

Vorzugsweise werden die Klemmriemen jeweils um mindestens zwei Umlenkrollen geführt, die am Einlaufbereich bzw. am Auslaufbereich der erfindungsgemäßen Transportvorrichtung vorgesehen sind. Die Vorlaufstränge der beiden Klemmriemen verlaufen dabei von der jeweiligen Umlenkrolle im Einlaufbereich über die mindestens zwei Drehzylinder zur jeweiligen Umlenkrolle am Auslaufbereich der Transportvorrichtung. Der Rücklaufstrang der Klemmriemen wird über eine oder mehrere Stützrollen zur Umlenkrolle des Einlaufbereichs zurückgeführt.

Die beiden Umlenkrollen am Einlaufbereich der Transportvorrichtung sind auf gegenüberliegenden Seiten des angeförderten Behälterstroms angeordnet. Die beiden über diese Umlenkrollen geführten Klemmriemen nehmen dann den einreihigen Behälterstrom auf und führen diese um die mindestens zwei Drehzylinder herum bis zu den jeweiligen Umlenkrollen am Auslaufbereich der Transportvorrichtung. Letztere sind ebenfalls wieder an gegenüberliegenden Seiten des abzufördernden Behälterstroms angeordnet.

In einer weiteren bevorzugten Ausführungsform sind im Einlaufbereich der Transportvorrichtung zwischen den Umlenkrollen und dem ersten Drehzylinder Schleifleisten angeordnet, zwischen denen die Klemmriemen und die Behälter hindurchgeführt werden. Diese Schleifleisten sind dabei beiderseitig des anfördernden Transporteurs vorgesehen und werden dazu verwendet, Druck auf die Behälterwände auszuüben noch bevor die Behälter um die Drehzylinder herumgeführt werden. Dadurch kann der vorhandene Raum noch besser ausgenutzt werden, um eine möglichst lange Druckstrecke bereitzustellen.

In einer weiteren bevorzugten Ausführungsform sind auch im Auslaufbereich der Transportvorrichtung zwischen dem zweiten Drehzylinder und den Umlenkrollen Schleifleisten angeordnet, zwischen denen die Klemmriemen und die Behälter hindurchgeführt werden. Mit den Schleifleisten im Auslaufbereich kann die Druckstrecke noch weiter verlängert werden.

Vorzugsweise sind die Klemmriemen antreibbar ausgebildet. Die Geschwindigkeiten der Klemmriemen können dabei unabhängig voneinander eingestellt werden.

Der Antrieb der Klemmriemen kann durch beliebige Motoren realisiert werden. Besonders geeignet sind in diesem Zusammenhang Synchronmotoren, vorzugsweise permanent erregte Synchronmotoren.

Die Antriebe der Klemmriemen sind vorzugsweise in mindestens einer der beiden Umlenkrollen oder in mindestens einem der Drehzylinder angeordnet, um welche jeder der Klemmriemen gespannt ist. Auch hierbei kann als Antrieb ein Außenläufermotor zum Einsatz kommen. Der Außenläufermotor kann vorzugsweise eine Umlenkrolle oder einen Drehzylinder ausbilden. Vorzugsweise wird hierdurch der Raum vergrößert, der zur Anordnung einer Inspektionsvorrichtung zur Verfügung steht. Durch die Verwendung von Außenläufermotoren, die im Drehzylinder bzw. den Umlenkrollen integriert sind, wird nicht nur eine Platzersparnis erzielt, sondern die Transportvorrichtung wird auch insgesamt besser zugänglich, wodurch zum Beispiel Wartung und Betrieb einer solchen Transportvorrichtung erleichtert wird.

Wenn nur jeweils eine der Umlenkrollen angetrieben ist, dann ist der Antrieb vorzugsweise in der Umlenkrolle angeordnet, welche sich in Transportrichtung der zu befördernden Behälter stromabwärts befindet. Hierdurch wird gewährleistet, dass der Vorlaufstrang des zugeordneten Klemmriemens jederzeit straffgezogen ist.

Eine noch bessere Kontrolle der Riemengeschwindigkeiten kann dadurch erzielt werden, dass jeweils beide Umlenkrollen der Klemmriemen angetrieben sind. Wenn zwischen den Behältern größere Lücken sind, oder wenn sich noch keine Behälter auf der Transporteinrichtung befinden, können die Klemmriemen in direkten Kontakt zueinander kommen, wodurch erhebliche Reibung auftreten kann. In diesen Situationen können die Geschwindigkeiten der Klemmriemen elektronisch so aneinander angepasst werden, dass es zu relativ geringer Relativbewegung und damit zu allenfalls geringer Reibung zwischen den Klemmriemen kommt.

Durch eine Variation der Antriebsgeschwindigkeiten der Umlenkrollen kann die Riemenlänge des Vorlaufstrangs der Klemmriemen temporär verändert werden. Die Riemenlänge des Vorlaufstrangs eines Klemmriemens ist die Länge des Klemmriemens zwischen dem Einlaufbereich und dem Auslaufbereich der Transportvorrichtung, in dem die Behälter zwischen den Klemmriemen geführt werden. Die in diesem Bereich benötigte Länge des Klemmriemens hängt von der Anzahl der momentan auf der Transportvorrichtung beförderten Behälter ab, und nimmt mit der Anzahl der momentan auf der Transportvorrichtung beförderten Behälter zu.

Wenn jeweils die Umlenkrolle am stromaufwärts gelegenen Einlaufbereich der Transporteinrichtung kurzfristig eine höhere Umfangsgeschwindigkeit als die zugehörige Umlenkrolle am stromabwärts gelegenen Auslaufbereich der Transporteinrichtung aufweist, so wird die Riemenlänge des Vorlaufstrangs erhöht und die Behälter werden weniger stark an den Drehzylinder gepresst. Umgekehrt wird die Riemenlänge des Vorlaufstrangs erniedrigt, wenn die Umlenkrollen am Einlaufbereich kurzfristig mit einer geringeren Umfangsgeschwindigkeit als die Umlenkrolle am Auslaufbereich betrieben werden.

Um die Riemenlänge im Vorlaufstrang wieder auf das ursprüngliche Niveau zurückzusetzen, müssen die Umlenkrollen anschließend gegebenenfalls umgekehrt angesteuert werden. Dadurch kann eine kurzfristig verkürzte Riemenlänge wieder ausgeglichen werden.

Zusätzlich oder als Alternative zu einem Antrieb über die Umlenkrollen kann auch mindestens einer der Drehzylinder einen Antrieb aufweisen. Vorzugsweise treibt ein Drehzylinder jeweils den radial innenliegenden Klemmriemen an, also den Klemmriemen der durchwegs in direktem Kontakt mit dem Drehzylinder ist.

Zur Verbesserung der Kraftübertragung, können die Klemmriemen und die angetriebenen Umlenkrollen bzw. Drehzylinder korrespondierende Profile aufweisen.

Die Drehzylinder können aber auch jeweils frei drehend ausgeführt sein, sodass der jeweils anliegende Klemmriemen an dem Drehzylinder frei abrollen kann.

Erfindungsgemäß sind die beiden Drehzylinder in horizontaler Richtung zueinander versetzt angeordnet, und die Behälter werden auf einer S-förmigen Transportstrecke um die beiden Drehzylinder herum gefördert. Der von den Klemmriemen erfasste Behälterstrom wird dabei zunächst um den ersten Drehzylinder geführt. Bei dem Transport um den ersten Drehzylinder herum werden die Behälter von dem radial außenliegenden ersten Klemmriemen gegen den ersten Drehzylinder gedrückt. Der Anpressdruck ist dabei ausreichend, um die Behälter frei schwebend am ersten Drehzylinder festzuhalten.

Direkt anschließend werden die Behälter um den zweiten Drehzylinder herum geführt. Bei dem Transport um den zweiten Drehzylinder herum werden die Behälter von dem nunmehr radial außenliegenden zweiten Klemmriemen gegen den zweiten Drehzylinder gedrückt. Auch in diesem Fall ist der Anpressdruck zwischen den Behältern und dem Drehzylinder ausreichend hoch, um die Behälter frei schwebend am zweiten Drehzylinder festzuhalten.

Vorteilhafterweise werden die Behälter jeweils etwa mit einem Umschlingungswinkel von etwa 180° um die beiden Drehzylinder geführt. Je nach Anordnung der Drehzylinder können aber auch kleinere oder größere Umschlingungswinkel gewählt werden. Je größer der Umschlingungswinkel ist, desto länger ist - bei gleichbleibender Transportgeschwindigkeit - die Verweilzeit der Behälter auf der erfindungsgemäßen Transportvorrichtung und desto länger kann ein externer Druck auf die Behälterwand ausgeübt werden. Bevorzugter Weise kann der Umschlingungswinkel daher auch bis zu 240°, besonders bevorzugt etwa 210° betragen.

Um die Verweilzeit der Behälter weiter zu erhöhen, können auch mehr als zwei Drehzylinder vorgesehen sein, um die die Behälter geführt werden. Vorzugsweise werden auch bei der Verwendung von drei oder mehr Drehzylindern die Behälter so um die Drehzylinder geführt, dass diese abwechselnd vom ersten und vom zweiten Klemmriemen an die jeweiligen Drehzylinder gedrückt werden.

Um die Gefahr eines Durchrutschens der Behälter nach unten zu vermeiden, kann die Transportstrecke um die Drehzylinder herum zusätzlich mit einem kurvenförmigen Transporteur oder einer gebogenen Schiene versehen sein, über die die Behälter zusätzlich unterstützt werden.

Da die Behälter und die Klemmriemen bzw. die Drehzylinder jeweils voneinander abrollen, kann Reibung weitgehend vermieden werden. Die dadurch erreichbare Länge der Transportstrecke auf der die Behälter unter äußerer Druckeinwirkung stehen oder auf der die Behälter inspiziert werden können, kann daher deutlich größer sein, als dies bisher bei linearen Transporteinrichtungen der Fall ist. Durch den kurvenförmigen Transportweg baut die Vorrichtung außerdem insgesamt kompakter als bisher verfügbare lineare Riemenfördereinrichtungen.

Auf jeder Seite des zur transportierenden Behälterstroms können ein einziger oder mehrere parallel und übereinander angeordnete Klemmriemen zum Einsatz kommen. Mit mehreren zum Beispiel zwei oder drei parallel angeordneten Klemmriemen können die Behälter gegebenenfalls stabiler transportiert werden.

Die sich gegenüberliegenden Klemmriemen können jeweils versetzt zueinander angeordnet sein. Vorteilhafterweise ist dabei dann jeder Klemmriemen auf einer unterschiedlichen Höhe angeordnet. Dies hat insbesondere den Vorteil, dass selbst bei Lücken im Behälterstrom, verhindert werden kann, dass zwei benachbarte Klemmriemen aufeinander zu liegen kommen und dabei unnötig Reibung produzieren.

Insbesondere wenn mehrere versetzt angeordnete Klemmriemen zum Einsatz kommen, kann der Drehzylinder vorteilhaft aus mehreren voneinander unabhängig drehbaren Zylinderscheiben aufgebaut sein. In dieser sandwichartigen Struktur, kann jede Zylinderscheibe einem der Klemmriemen zugeordnet sein. Bei Lücken im Behälterstrom, kommen die an sich radial außenliegenden Klemmriemen dann auf der dem jeweiligen Klemmriemen zugeordneten Zylinderscheibe zu liegen und können über diese Zylinderscheibe abrollen. Weil die Zylinderscheiben voneinander unabhängig drehbar gelagert sind, können die Klemmriemen unterschiedliche Riemengeschwindigkeiten aufweisen, ohne dass dabei zusätzliche Reibung am Drehzylinder auftritt.

Eine oder mehrere der Zylinderscheiben kann antreibbar ausgeführt und zum Beispiel mit einem eigenen Außenläufermotor versehen sein. Auf diese Weise können die Drehzylinder beim Einsatz von mehreren versetzt angeordneten Klemmriemen auch als Antrieb für die Klemmriemen eingesetzt werden.

Ein radial innenliegender Klemmriemen wird jeweils direkt über den äußeren Umfang des jeweiligen Drehzylinders oder der zugeordneten Zylinderscheibe geführt. Die Behälter werden also von dem radial außen verlaufenden Klemmriemen gegen den radial innenliegenden Klemmriemen und gegen den Drehzylinder gedrückt. Dabei verhindert der radial innenliegende Klemmriemen einen direkten Kontakt zwischen den Behältern und dem jeweiligen Drehzylinder.

Der Drehzylinder kann auch eine oder mehrere umlaufende Nuten aufweisen, in der jeweils einer der Klemmriemen geführt ist. Die Nuten bilden dabei eine Aufnahme für den jeweiligen Klemmriemen und definieren dessen vertikale Position beim Umlauf um den Drehzylinder. Durch solche Nuten kann verhindert werden, dass die Klemmriemen zum Beispiel durch durchrutschende Behälter am äußeren Umfang der Drehzylinder nach unten gezogen werden.

Die Nuten können dabei eine Tiefe haben, die geringer ist als die Dicke der Klemmriemen. In diesem Fall werden die Klemmriemen zwar in den Nuten geführt. Die Oberseite der Klemmriemen ragt aber noch aus den Nuten heraus, so dass diese auch in dieser Konfiguration die Anlagefläche für die Behälter darstellen.

Die Nuten können aber auch eine Tiefe aufweisen, die größer ist als die Dicke der Klemmriemen. In diesem Fall werden die Klemmriemen dann vollständig von den Nuten aufgenommen. Die Behälter werden in dieser Konfiguration dann von den außenliegenden Klemmriemen direkt an die Umfangsfläche des Drehzylinders gepresst.

Um die wirksame Länge der Vorlaufstränge der Klemmriemen sowie die Riemenspannung der Vorlaufstränge der Klemmriemen kontrollieren zu können, kann jeder Klemmriemen mit einer Ausgleichseinrichtung versehen sein. Die benötigte Länge des Vorlaufstrangs jedes Klemmriemens hängt von der Anzahl der momentan auf der Transportvorrichtung beförderten Behälter ab, und nimmt mit der Anzahl der momentan auf der Transportvorrichtung beförderten Behälter zu.

Die Ausgleichseinrichtung kann dabei ein oder mehrere Ausgleichselemente umfassen, die innerhalb eines Klemmriemens, also innerhalb der Bahn, die durch den oder die umlaufenden Klemmriemen beschrieben wird, angeordnet sind.

Die Riemenlänge des Vorlaufstrangs eines Klemmriemens kann mit den Ausgleichselementen in Abhängigkeit von der Anzahl, Form und/oder Größe der auf der Überführeinrichtung zu transportierenden Behälter eingestellt werden.

Vorzugsweise ist jedes Ausgleichselement ausgebildet, den Rücklaufstrang eines Klemmriemens zu kontaktieren und gegen diesen in einer Richtung, welche den Drehzylindern abgewandt ist, angestellt zu werden.

Wenn sich die Anzahl der auf der Überführeinrichtung transportierten Behälter ändert, kann die wirksame Länge des Vorlaufstrangs des Klemmriemens auf einfache Weise über das Ausgleichselement verändert werden.

Vorzugsweise umfasst das Ausgleichselement eine Stelleinrichtung, mit der eine Stützrolle gegen den Rücklaufstrang des Klemmriemens angestellt werden kann. Die Stelleinrichtung kann dabei eine motorisch angetriebene, eine mechanische, eine pneumatische oder eine hydraulische Stelleinrichtung sein. Eine motorisch angetriebene Stelleinrichtung kann insbesondere einen elektrischen Linearantrieb umfassen. Bei der Verwendung von mehreren Stützrollen können alle oder eine beliebige Anzahl der Stützrollen mit einem Ausgleichselement versehen sein.

Die Ausgleichseinrichtung dient vor allem dazu, die benötigte Länge des Vorlaufstrangs des Klemmriemens an die momentane Transportsituation auf der Überführeinrichtung anzupassen. Gleichzeitig kann die Ausgleichseinrichtung aber auch zur Einstellung der Riemenspannung verwendet werden. Dadurch kann sichergestellt werden, dass die Behälter jederzeit mit einem vorgegebenen Anpressdruck an den Drehzylinder gedrückt und sicher gehalten werden.

Das mindestens eine Ausgleichselement der Ausgleichseinrichtung wird dabei vorzugsweise so eingestellt, dass die zugeordnete Stützrolle mit einem vorgegebenen Druck gegen den Rücklaufstrang des Klemmriemens angestellt ist. Wenn sich die benötigte Länge des Vorlaufstrangs des Klemmriemens ändert, dann wird die Position der Stützrolle von dem Ausgleichselement so verfahren, dass bei konstanter Riemenspannung der Vorlaufstrang entsprechend verlängert, bzw. verkürzt wird. Je nach Dimensionierung der Transportvorrichtung, können dabei Längenänderungen von bis zu mehreren Dezimetern auftreten. Die ein oder gegebenenfalls mehreren Ausgleichselemente der Ausgleichsvorrichtung müssen daher entsprechend weite Verfahrwege und damit einhergehende Längenänderungen bewerkstelligen können.

Durch das Vorsehen der Ausgleichseinrichtung kann der Abstand der Umlenkrollen des Klemmriemens unverändert bleiben. Darüber hinaus kann eine Druck- bzw. Dichtigkeitsprüfung durch das Vorsehen der Ausgleichseinrichtung optimiert erfolgen, da der auf die zu transportierenden Behälter ausgeübte Druck durch die Einstellung der Spannung des Klemmriemens optimal eingestellt werden kann.

Damit der Vorlaufstrang und der Rücklaufstrang des jeweiligen Klemmriemens nicht aufeinander reiben, können ein oder mehrere Stützelemente vorgesehen sein, über die der Rücklaufstrang eines Klemmriemens geführt wird. Dadurch wird verhindert, dass der Rücklaufstrang des Klemmriemens gegen den inneren Vorlaufstrang des Klemmriemens oder gegen ein anderes Element der Transporteinrichtung läuft und es dabei wiederum zu unerwünschter Reibung kommt.

Diese weiteren Stützelemente können insbesondere ein oder mehrere Stützrollen sein, über die der Rücklaufstrang des jeweiligen Klemmriemens geführt wird. Je nach Länge und Komplexität der Transportstrecke können ein oder mehrere solcher Stützrollen vorgesehen werden.

Wie oben bereits erwähnt, können die ein oder mehreren Stützrollen auch mit der Ausgleichseinrichtung kombiniert sein und gleichzeitig zum Einstellen der Riemenlänge des Vorlaufstrangs der Klemmriemen verwendet werden.

Vorzugsweise ist der äußere Umfang der Drehzylinder gleichmäßig kreisförmig ausgebildet. Mit der vorliegenden Transporteinrichtung kann eine Vielzahl von Behältern gleichzeitig mit einer beliebigen Geschwindigkeit transportiert werden. Die Transportleistung der Transporteinrichtung kann dabei jederzeit an die Zufuhrrate der zu transportierenden Behälter angepasst werden. Dies ist ein entscheidender Vorteil zu herkömmlichen umlaufenden Transporteuren, wie zum Beispiel Sternrädern, bei denen bislang immer eine konstante Zuführrate eingehalten werden musste.

Die vorliegende Erfindung betrifft auch ein Verfahren zum Transport von stehenden, einreihig angeordneten Behältern, umfassend die Schritte:
Bereitstellen eines ersten Klemmriemens und eines zweiten Klemmriemens, zwischen denen die einreihig angeordneten Behälter gehalten und transportiert werden, Bereitstellen mindestens eines ersten Drehzylinders und eines zweiten Drehzylinders, um die die von den Klemmriemen gehaltenen Behälter nacheinander transportiert werden, wobei die beiden Drehzylinder in horizontaler Richtung zueinander versetzt angeordnet sind, und die Behälter auf einer S-förmigen Transportstrecke um die beiden Drehzylinder herum gefördert werden, und
wobei die Behälter und die Klemmriemen nacheinander so um die mindestens zwei Drehzylinder herumgeführt werden, dass die Behälter dabei jeweils von dem radial außen liegenden Klemmriemen an den Drehzylinder gedrückt werden.

Die erfindungsgemäße Transportvorrichtung kann überall dort eingesetzt werden, wo es vorteilhaft ist, wenn Behälter frei schwebend gehalten werden. Die erfindungsgemäße Transportvorrichtung kann zum Beispiel bei einer Behälterinspektionseinrichtung insbesondere bei einer Behälterbodeninspektion vorgesehen werden. Mit der erfindungsgemäßen Transportvorrichtung kann die Wegstrecke, auf der die Behälter frei schwebend transportiert werden, gegenüber herkömmlichen Vorrichtungen deutlich erhöht werden.

Die erfindungsgemäße Transportvorrichtung kann insbesondere vorteilhaft bei der Dichtigkeitskontrolle von befüllten verformbaren Behältern, wie PET Flaschen oder Leichtmetall-Dosen, eingesetzt werden. Dazu wird ein exakt dosierbarer Druck auf die Behälter ausgeübt. Sind die Behälter undicht, ist der resultierende Innendruck niedriger, während der Füllstand ansteigt. Um auch kleine Lecks zu detektieren muss dabei eine gewisse Verweilzeit der Behälter in der Druckeinrichtung gewährleistet werden. Mit der erfindungsgemäßen Transportvorrichtung kann einerseits der mittels der Klemmriemen auf die einzelnen Behälter ausgeübte Druck präzise eingestellt und dabei andererseits die Verweilzeit der Behälter in der Druckeinrichtung gegenüber herkömmlichen Vorrichtungen deutlich erhöht werden.

Am Ende der Transporteinrichtung kann eine herkömmliche Inspektionseinrichtung vorgesehen sein, mit der der Behälterinnendruck und oder die Füllhöhe der Behälter untersucht werden kann, um daraus eine Aussage über die Dichtigkeit der Behälter zu treffen.

Dadurch dass die Behälter in der erfindungsgemäßen Transportvorrichtung nahezu reibungsfrei befördert werden, kann die Transportstrecke und damit die Verweilzeit der Behälter in der Druckeinrichtung gegenüber konventionellen Systemen deutlich erhöht werden. Durch Größe und Anzahl der eingesetzten Drehzylinder und Klemmriemen kann die Länge der Verweilzeit und der ausgeübte Druck auf die Behälter optimal an die jeweiligen Transportbedingungen angepasst werden.

Eine weitere Anwendungsmöglichkeit der vorliegenden Erfindung liegt in der Verschlusskontrolle, genauer gesagt der Kontrolle der benötigten Auf- und/oder Zudrehkraft von Schraubverschlüssen von verschlossenen Behältern. Eine solche Kontrolle ist notwendig, wenn überprüft werden soll, ob sich die Schraubverschlüsse der befüllten Behälter mit einer gewünschten Aufdrehkraft öffnen lassen oder ob Schraubverschlüsse fest genug zugedreht sind.

Zur Bestimmung der benötigten Auf- oder Zudrehkraft der Schraubverschlüsse werden die Behälter dabei auf der erfindungsgemäßen Transportvorrichtung befördert und dort beidseitig von den Klemmriemen reibschlüssig gehalten. Die zu überprüfenden Behälter werden dann durch eine Auf-/Zudrehvorrichtung geführt, die im Wesentlichen aus einem Paar von einander gegenüber angeordneten Bändern (im folgenden Aufdrehbänder genannt) besteht. Diese Aufdrehbänder sind dabei in Höhe der Schraubverschlüsse der zu überprüfenden Behälter angebracht und so angeordnet, dass die Behälterverschlüsse reibschlüssig zwischen den beiden Aufdrehbändern hindurchgeführt werden. Mittels einer Anstelleinrichtung, kann der Abstand zwischen den Aufdrehbändern verändert werden, so dass dadurch der Anpressdruck und damit die Reibung zwischen den Aufdrehbändern und den Behälterverschlüssen variiert werden kann.

Durch gezielte Ansteuerung der Geschwindigkeiten der Aufdrehbänder gegenüber der Transportgeschwindigkeit der Behälter, können die Aufdrehbänder dazu verwendet werden, den Schraubverschluss relativ zum Behälter zu verdrehen.

Vorzugsweise werden die Schraubverschlüsse dabei lediglich soweit auf- oder zugedreht, dass die Versiegelung der Behälter aufrechterhalten bleibt und dass insbesondere das Frischesiegel unversehrt bleibt. Zum Überprüfen, ob die benötigte Auf- oder Zudrehkraft der Schraubverschlüsse der Behälter in einem vorgegebenen Bereich liegt, ist es daher üblicherweise ausreichend, den Schraubverschluss um einen Drehwinkel von maximal 30°, vorzugsweise von maximal 20° oder 10° zu verdrehen.

Über eine geeignete Messeinrichtung kann die zum Auf- oder Zudrehen der Behälterverschlüsse notwendige Kraft bestimmt werden. Die benötigte Aufdrehkraft kann zum Beispiel über die Stromaufnahme der Antriebe bestimmt werden.

Nach der Behälterverschlusskontrolle können die Behälterverschlüsse wieder in die ursprüngliche oder eine andere gewünschte Position zurückgedreht werden. Hierzu kann zum Beispiel ein zweiter Satz von Aufdrehbändern vorgesehen sein.

Die Auf-/Zudrehvorrichtung ist vorteilhafterweise so dimensioniert, dass jeweils nur ein Behälterverschluss von der Auf-/Zudrehvorrichtung erfasst wird. Da die Behälter auf der Transportvorrichtung einreihig und ohne Abstand untereinander transportiert werden können, sollte die Länge der Auf-/Zudrehvorrichtung daher kleiner sein, als der Durchmesser der zu transportierenden Behälter.

Vorzugsweise ist die Auf-/Zudrehvorrichtung in einem Bereich der erfindungsgemäßen Transportvorrichtung angeordnet, in dem die Behälter geradlinig transportiert werden. In einem solchen Fall können auch die Aufdrehbänder geradlinig ausgeführt werden. Ist die Auf-/Zudrehvorrichtung in einem Bereich der erfindungsgemäßen Transportvorrichtung angeordnet, in dem die Behälter auf einer Kreisbahn transportiert werden, so kann der kreisförmige Transportweg mittels Federkraft kompensiert werden. Hierzu können entweder die Bänder selbst ausreichend elastisch sein, oder die Bänder können federnd gelagert sein.

Um Verschlüsse von Behältern unterschiedlicher Größen prüfen zu können, können die Aufdrehbänder vorzugsweise vertikal und horizontal verfahrbar ausgeführt sein. Vorzugsweise können die Aufdrehbänder entsprechend den Dimensionen der zu untersuchenden Behälter automatisch in die benötigte Position verfahren werden.

Im Folgenden wird die vorliegende Erfindung durch die beiliegenden Zeichnungen näher beschrieben. Hierbei zeigt:
- Fig. 1: eine schematische Draufsicht einer erfindungsgemäßen Transportvorrichtung,
- Fig. 2: Querschnittansicht eines Behälters der zwischen drei Klemmriemen um einen segmentierten Drehzylinder geführt wird,
- Fig. 3: erfindungsgemäße Transportvorrichtung mit Auf-/Zudrehvorrichtung, und
- Fig. 4: Seitenansicht eines Behälters im Bereich der Auf-/Zudrehvorrichtung.

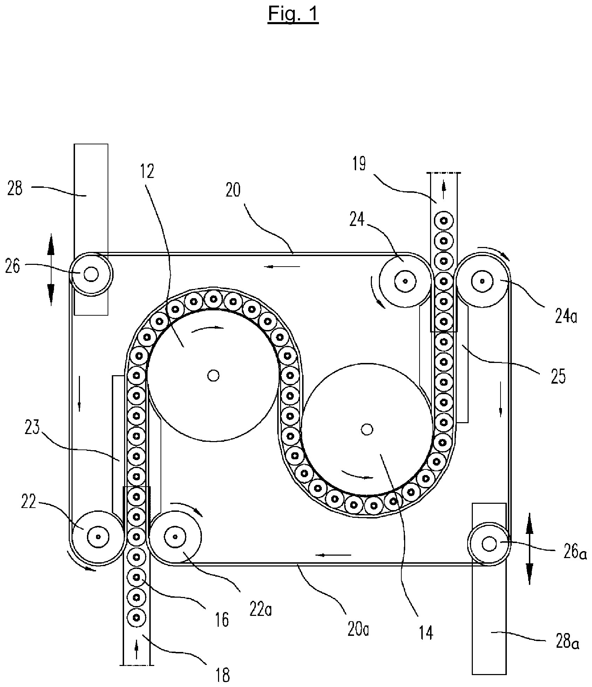

Fig. 1 zeigt eine Ausführungsform der erfindungsgemäßen Transportvorrichtung 10 mit einem ersten Drehzylinder 12 und einem dazu horizontal versetzt angeordneten zweiten Drehzylinder 14. Ein erster Klemmriemen 20 und ein zweiter Klemmriemen 20a, sind S-förmig um die beiden Drehzylinder 12, 14 gespannt und beschreiben dabei eine Transportstrecke für die zu transportierenden Behälter 16.

Der erste Klemmriemen 20 wird dabei über zwei angetriebene Umlenkrollen 22, 24 sowie eine Stützrolle 26 geführt. Der zweite Klemmriemen 20a wird über zwei angetriebene Umlenkrollen 22a, 24a und ebenfalls über eine Stützrolle 26a geführt.

Die beiden Umlenkrollen 22, 22a sind dabei am Einlaufbereich der Transportvorrichtung 10 an gegenüberliegenden Seiten des angeförderten Behälterstroms angeordnet. Die beiden Umlenkrollen 24, 24a sind dagegen am Auslaufbereich der Transportvorrichtung 10 ebenfalls wieder an gegenüberliegenden Seiten des abzufördernden Behälterstroms angeordnet.

Der erste Klemmriemen 20 wird von der Umlenkrolle 22 ausgehend S-förmig um die beiden Drehzylinder 12, 14 gespannt und über die Umlenkrolle 24 sowie die Stützrolle 26 zur Umlenkrolle 22 zurückgeführt.

Der Bereich des Klemmriemens 20 zwischen den Umlenkrollen 22 und 24, also der Bereich, in dem der Klemmriemen mit den Behältern in Kontakt kommt, wird dabei als der Vorlaufstrang des Klemmriemens bezeichnet. Der Bereich des ersten Klemmriemens zwischen der Umlenkrolle 24 und der Umlenkrolle 22, also der Bereich, der über die Stützrolle 26 geführt wird, wird als der Rücklaufstrang des Klemmriemens 20 bezeichnet.

Auf dieselbe Weise wird der zweite Klemmriemen 20a von der Umlenkrolle 22a ausgehend S-förmig um die beiden Drehzylinder 12, 14 gespannt und über die Umlenkrolle 24a sowie die Stützrolle 26a zur Umlenkrolle 22a zurückgeführt.

Im Bereich des ersten Drehzylinders 12 verläuft der erste Klemmriemen 20 radial außenliegend in Bezug auf den zweiten Klemmriemen 20a. Im Bereich des zweiten Drehzylinders 14 verläuft der erste Klemmriemen 20 dagegen radial innen liegend in Bezug auf den zweiten Klemmriemen 20a. Dadurch werden die Behälter 16 zunächst von dem ersten Klemmriemen 20 gegen den ersten Drehzylinder 12 gedrückt und anschließend von dem zweiten Klemmriemen 20a gegen den zweiten Drehzylinder 14 gedrückt.

Um die wirksame Länge des Vorlaufstrangs und um die Riemenspannung der Klemmriemen 20, 20a einzustellen, sind die Stützrollen 26, 26a im Rücklaufstrang jeweils zusätzlich mit einem Ausgleichselement 28, 28a versehen.

In Fig. 1 wird über einen herkömmlichen Transporteur 18 ein kontinuierlicher einreihiger Behälterstrom angefördert. Dieser Transporteur 18 führt den Behälterstrom zwischen den Umlenkrollen 22, 22a hindurch bis zum ersten Drehzylinder 12. Ab den Umlenkrollen 22, 22a werden die Behälter 16 dann zudem seitlich von den Klemmriemen 20, 20a gehalten. Zwischen den Umlenkrollen 22, 22a und dem ersten Drehzylinder 12 werden die Klemmriemen 20, 20a und die Behälter 16 durch zwei seitlich der Transportstrecke angeordnete Schleifleisten 23 hindurch geführt. Mit diesen Schleifleisten 23 werden die Klemmriemen 20, 20a gegen die Außenwände der Behälter 16 gedrückt, sodass auch dieser Bereich der Vorrichtung bereits als Teil der Druckeinrichtung genutzt wird.

Der von den Klemmriemen 20, 20a erfasste Behälterstrom wird dann um den ersten Drehzylinder 12 geführt. Bei dem Transport um den ersten Drehzylinder 12 herum, werden die Behälter 16 von dem radial außenliegenden ersten Klemmriemen 20 gegen den ersten Drehzylinder 12 gedrückt. Der Anpressdruck ist dabei ausreichend, um die Behälter 16 frei schwebend am Drehzylinder 12 festzuhalten.

Direkt anschließend werden die Behälter 16 um den zweiten Drehzylinder 14 herum geführt. Bei dem Transport um den zweiten Drehzylinder 14 herum, werden die Behälter 16 von dem nunmehr radial außenliegenden zweiten Klemmriemen 20a gegen den zweiten Drehzylinder 14 gedrückt. Auch in diesem Fall ist der Anpressdruck zwischen den Behältern 16 und dem Drehzylinder 14 ausreichend hoch, um die Behälter 16 frei schwebend am Drehzylinder 14 festzuhalten. Anschließend werden die Behälter 16 wieder auf einem herkömmlichen Transporteur 19 abgesetzt und in Richtung der Umlenkrollen 24, 24a weitertransportiert. Zwischen dem zweiten Drehzylinder 14 und den Umlenkrollen 24, 24a werden die Klemmriemen 20, 20a und die Behälter 16 dabei wiederum durch zwei seitlich der Transportstrecke angeordnete Schleifleisten 25 hindurchgeführt. Auch mit diesen Schleifleisten 25 werden die Klemmriemen 20, 20a gegen die Außenwände der Behälter 16 gedrückt, so dass auch dieser Bereich der Vorrichtung wieder zur Druckausübung auf die Behälter 16 genutzt wird.

Um die Gefahr eines Durchrutschens der Behälter 16 zu vermeiden, kann zusätzlich ein kurvenförmiger Transporteur oder eine gebogene Führungsplatte vorgesehen sein, über die die Behälter 16 zusätzlich unterstützt werden.

Da die Behälter 16 und die Klemmriemen 20, 20a jeweils voneinander abrollen, kann Reibung weitgehend vermieden werden. Die dadurch erreichbare Länge der Transportstrecke auf der die Behälter 16 unter äußerer Druckeinwirkung stehen, kann daher deutlich erhöht werden, als dies bisher bei linearen Transporteinrichtungen der Fall ist.

Im Bereich des Ausgangs der Transporteinrichtung 10 kann eine herkömmliche Inspektionseinrichtung (nicht gezeigt) vorgesehen sein, mit der der Behälterinnendruck und oder die Füllhöhe der Behälter 16 untersucht werden kann.

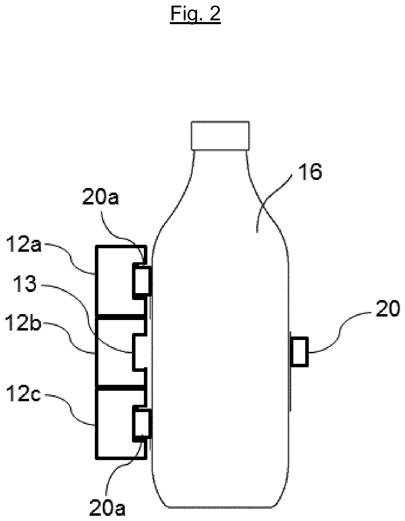

In Fig. 2 ist eine Querschnittsansicht eines Behälters im Bereich eines ersten Drehzylinders 12 in einer modifizierten Ausführungsform abgebildet. Im Gegensatz zu der Ausführungsform nach Fig. 1 werden die Behälter 16 in der Ausführungsform nach Fig. 2 zwischen insgesamt drei vertikal zueinander versetzt angeordneten Klemmriemen 20, 20a geführt.

Der Drehzylinder 12 ist dabei segmentiert und weist drei Zylinderscheiben 12a, 12b, 12c auf, die umfangsseitig jeweils mit einer Nut 13 zur Aufnahme eines der drei Klemmriemen 20, 20a versehen sind. Die drei Zylinderscheiben 12a, 12b, 12c sind frei drehbar um eine gemeinsame Drehachse angeordnet.

Die Tiefe der Nuten 13 ist jeweils geringer als die Dicke der Klemmriemen 20, 20a, sodass die Oberseite der Klemmriemen 20a über den Umfang der Zylinderscheiben 12a, 12b, 12c vorstehen und eine Anlagefläche für die Behälter 16 bilden. Der radial außenliegende Klemmriemen 20 presst die Behälter 16 an die Klemmriemen 20a und gegen die Zylinderscheiben 12a, 12b, 12c. Die Nuten 13 dienen dabei insbesondere der Führung der Klemmriemen 20a, so dass diese immer auf der vorgegebenen vertikalen Höhe um den Drehzylinder 12 herumgeführt werden.

Bei einer Lücke im Behälterstrom kommt der radial außenliegende Klemmriemen 20 ebenfalls mit dem Drehzylinder 12 in Kontakt. Der Klemmriemen wird dabei dann in der Nut 13 der mittleren Zylinderscheibe 12b aufgenommen. Da die Zylinderscheibe 12b gegenüber den Zylinderscheiben 12a, 12c frei drehbar gelagert ist, kommt es selbst dann nicht zu unnötiger zusätzlicher Reibung zwischen dem Drehzylinder 12 und dem Klemmriemen 20, wenn die Klemmriemen 20 und 20a unterschiedliche Geschwindigkeiten aufweisen.

Die Transportvorrichtung kann auch noch mit weiteren Klemmriemen und einem entsprechend stärker segmentierten Drehzylinder ausgeführt sein. Die einzelnen Zylinderscheiben können zudem eigene Antriebe aufweisen, mit denen die Klemmriemen angetrieben werden können.

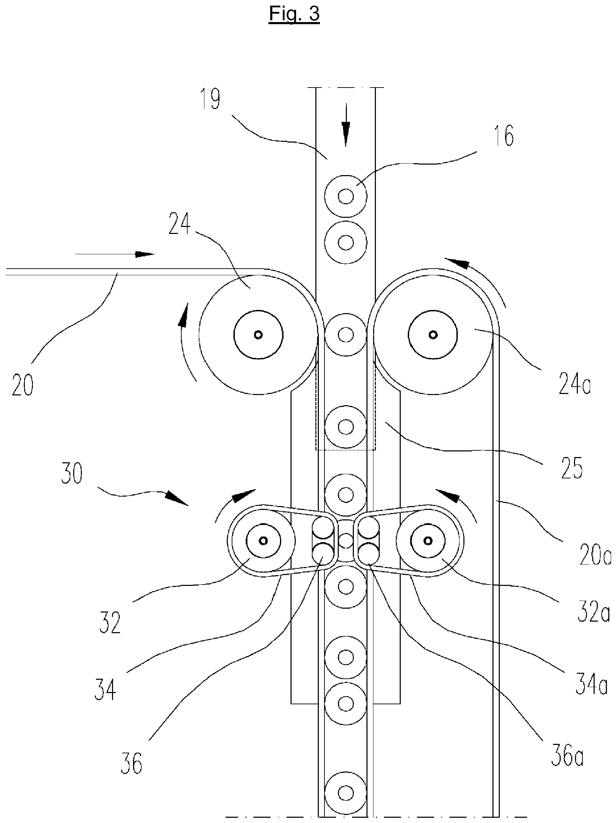

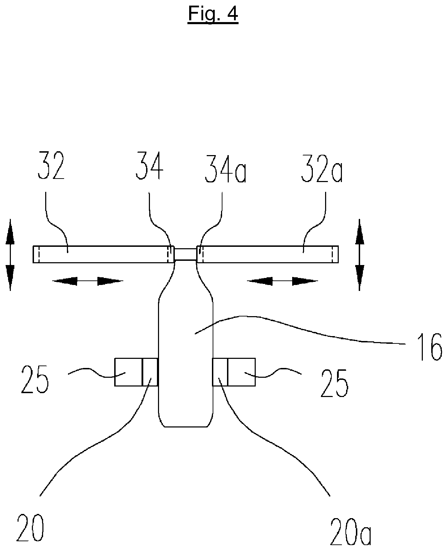

Eine Anwendungsmöglichkeit der vorliegenden Erfindung ist in den Figuren 3 und 4 dargestellt. Hierbei wird eine Verschlusskontrolle durchgeführt, wobei ermittelt wird, wie groß die benötigte Kraft ist, um einzelne Behälterverschlüsse auf- oder zuzudrehen.

Zu diesem Zweck ist eine Auf-/Zudrehvorrichtung 30 vorgesehen, die im Wesentlichen aus einem Paar von einander gegenüber angeordneten Aufdrehbändern 34, 34a besteht. Die Aufdrehbänder 34, 34a werden dabei jeweils über Rollen 32, 32a angetrieben und über Umlenkrollen 36 parallel zur Laufrichtung der Behälter 16 geführt.

Die Behälter werden dabei so zwischen den Klemmriemen 20, 20a transportiert, dass die Behälterverschlüsse zwischen den beiden Aufdrehbändern 34, 34a hindurchgeführt werden. Die Aufdrehbänder 34, 34a kommen dabei reibschlüssig mit den Behälterverschlüssen in Eingriff und können diese je nach Ansteuerung auf- oder zudrehen.

Im dem abgebildeten Ausführungsbeispiel ist die Auf-/Zudrehvorrichtung 30 im Einlaufbereich der erfindungsgemäßen Transportvorrichtung angeordnet. Alternativ oder zusätzlich kann die Auf-/Zudrehvorrichtung 30 auch im Auslaufbereich oder in einem Bereich zwischen den beiden Drehzylindern 12, 14 angeordnet sein. In diesen Bereichen werden die Behälter im Wesentlichen geradlinig transportiert, sodass die Aufdrehbänder 34, 34a ebenfalls einen geradlinigen Verlauf entlang der Transportrichtung haben können.

Um die Auf-/Zudrehvorrichtung 30 an unterschiedlich dimensionierte Behälter 16 anpassen zu können, sind die Aufdrehbänder 34, 34a jeweils über geeignete Stellelemente positionierbar. Diese ist in Fig. 4 durch die beiden bidirektionalen Pfeile angedeutet. Auf diese Weise kann sowohl die vertikale als auch die horizontale Position der Aufdrehbänder 34, 34a verändert werden.

Mit der Einrichtung zur horizontalen Positionierung kann dabei einerseits der Abstand zwischen den Aufdrehbänder 34, 34a, aber andererseits auch der Anpressdruck, mit dem die Aufdrehbänder 34, 34a an die Behälterverschlüsse angedrückt werden, variiert werden.

Das Aufdrehen bzw. das Zudrehen der Behälterverschlüsse wird über eine Relativbewegung der Aufdrehbänder 34, 34a gegenüber den Transportriemen 20, 20a bzw. den Behältern 16 ermöglicht. Um die hierfür benötigte Kraft zu ermitteln, muss ein Behälterverschluss nicht komplett abgeschraubt werden. Es ist ausreichend, wenn ein Behälterverschluss nur um einen Bruchteil einer vollen Umdrehung, z.B. um 30° verdreht wird. Idealerweise wird ein Schraubverschluss lediglich soweit auf- oder zugedreht, dass die Versiegelung des Behälters 16 aufrechterhalten bleibt.

Über eine geeignete Messeinrichtung kann die zum Auf- oder Zudrehen der Behälterverschlüsse notwendige Kraft bestimmt werden. Die benötigte Aufdrehkraft kann zum Beispiel über die Stromaufnahme der Antriebe der Aufdrehbänder 34, 34a bestimmt werden.

Die Erfindung ist nicht auf die beschriebenen Ausführungsformen beschränkt, sondern wird durch die nachfolgenden Ansprüchen definiert.

### Bezugszeichenliste

- 10: Transportvorrichtung
- 12: erster Drehzylinder
- 12a,b,c: Zylinderscheiben
- 13: Nut
- 14: zweiter Drehzylinder
- 16: Behälter
- 18: linearer Transporteur
- 19: linearer Transporteur
- 20: erster Klemmriemen
- 20a: zweiter Klemmriemen
- 22: Umlenkrolle
- 22a: Umlenkrolle
- 23: Schleifleisten
- 24: Umlenkrolle
- 24a: Umlenkrolle
- 25: Schleifleisten
- 26: Stützrolle
- 26a: Stützrolle
- 28: Ausgleichselement
- 28a: Ausgleichselement
- 30: Auf-/Zudrehvorrichtung
- 32, 32a: angetriebene Rolle
- 34, 34a: Aufdrehband
- 36: Umlenkrolle

## Patentansprüche

1. Transportvorrichtung (10) zum Transport von stehenden, einreihig angeordneten Behältern (16), umfassend:
einen ersten Klemmriemen (20) und einen zweiten Klemmriemen (20a), zwischen denen die einreihig angeordneten Behälter (16) gehalten und transportiert werden,
sowie mindestens einen ersten Drehzylinder (12) und einen zweiten Drehzylinder (14), um die die von den Klemmriemen (20, 20a) gehaltenen Behälter (16) transportiert werden,
wobei die Behälter (16) und die Klemmriemen (20, 20a) so um die mindestens zwei Drehzylinder (12, 14) herumgeführt werden, dass die Behälter (16) dabei jeweils von dem radial außen liegenden Klemmriemen (20, 20a) an die Drehzylinder gedrückt werden, und
wobei die beiden Drehzylinder in horizontaler Richtung zueinander versetzt angeordnet sind, und die Behälter auf einer S-förmigen Transportstrecke um die beiden Drehzylinder herum gefördert werden.

2. Transportvorrichtung (10) nach Anspruch 1, wobei die Drehzylinder (12, 14) und die Klemmriemen (20, 20a) unabhängig voneinander antreibbar ausgebildet sind.

3. Transportvorrichtung (10) nach einem der vorherigen Ansprüche, ferner umfassend:
einen ersten Transporteur (18), der ausgebildet ist die Behälter (16) anzufördern, einen zweiten Transporteur (19), der ausgebildet ist die Behälter (16) stromabwärts der Drehzylinder (12, 14) abzufördern.

4. Transportvorrichtung (10) nach einem der vorherigen Ansprüche, wobei der Transportweg der Behälter (16) um die Drehzylinder (12, 14) herum so verläuft, dass jeweils in abwechselnder Reihenfolge der erste (20) oder der zweite Klemmriemen (20a) radial außen angeordnet ist und die Behälter (16) an den jeweiligen Drehzylinder (12, 14) drückt.

5. Transportvorrichtung (10) nach einem der vorherigen Ansprüche, wobei jeder der Klemmriemen (20, 20a) um mindestens zwei Umlenkrollen (22, 24) verläuft.

6. Transportvorrichtung (10) nach einem der vorherigen Ansprüche, wobei beide Umlenkrollen (22, 24) mit voneinander unabhängigen Antrieben versehen sind.

7. Transportvorrichtung (10) nach einem der vorherigen Ansprüche mit einer Ausgleichseinrichtung, umfassend ein Ausgleichselement (28, 28a) und eine Stützrolle (26, 26a), mit der die Riemenlänge des Vorlaufstrangs jedes Klemmriemens (20, 20a) eingestellt werden kann.

8. Transportvorrichtung (10) nach einem der vorherigen Ansprüche, wobei die Drehzylinder (12, 14) aus mehreren unabhängig voneinander drehbar gelagerten Zylinderscheiben aufgebaut sind, die optional mit eigenen Antrieben ausgestattet sein können.

9. Transportvorrichtung (10) nach einem der vorherigen Ansprüche, wobei die Behälter (16) zwischen mehreren beidseitig des Behälterstroms und vertikal zueinander versetzt angeordneten ersten und zweiten Klemmriemen (20, 20a) gehalten und transportiert werden.

10. Transportvorrichtung (10) nach einem der vorherigen Ansprüche, ferner umfassend eine Auf-/Zudrehvorrichtung (30) mit der die Behälterverschlüsse in Eingriff gebracht werden können.

11. Verfahren zum Transport von stehenden, einreihig angeordneten Behältern (16), umfassend die Schritte:
• Bereitstellen eines ersten Klemmriemens (20) und eines zweiten Klemmriemens (20a), zwischen denen die einreihig angeordneten Behälter (16) gehalten und transportiert werden,
• Bereitstellen mindestens eines ersten und eines zweiten Drehzylinders (12, 14), um den die von den Klemmriemen (20, 20a) gehaltenen Behälter (16) transportiert werden,
wobei die beiden Drehzylinder in horizontaler Richtung zueinander versetzt angeordnet sind, und die Behälter auf einer S-förmigen Transportstrecke um die beiden Drehzylinder herum gefördert werden, und
wobei die Behälter (16) und die Klemmriemen (20, 20a) so um die Drehzylinder (12, 14) herumgeführt werden, dass die Behälter (16) dabei von dem radial außen liegenden Klemmriemen (20, 20a) nacheinander jeweils an die Drehzylinder (12, 14) gedrückt werden.

12. Verfahren zum Prüfen der Dichtheit von verformbaren befüllten Behältern, wobei die Behälter (16) auf einer Transportvorrichtung (10) gemäß einem der Ansprüche 1 bis 9 transportiert werden,
wobei mittels der Klemmriemen (20, 20a) ein vorgegebener Druck auf die Behälter (16) ausgeübt wird,
wobei der resultierende Innendruck und die Füllhöhe der Behälter (16) mittels entsprechenden Inspektionseinrichtungen überprüft wird.

13. Verfahren zur Verschlusskontrolle von verschlossenen Behältern (16), wobei die Behälter (16) auf einer Transportvorrichtung (10) gemäß Anspruch 10 transportiert werden,
wobei die Behälter (16) so zwischen den Klemmriemen (20, 20a) transportiert werden, dass die Behälterverschlüsse mit einer Auf-/Zudrehvorrichtung (30) in Eingriff kommen.

14. Verfahren zur Verschlusskontrolle von verschlossenen Behältern (16) gemäß Anspruch 13, wobei die Auf-/Zudrehvorrichtung (30) ein Paar von einander gegenüber angeordneten, angetriebenen Aufdrehbändern (34, 34a) umfasst, die reibschlüssig mit den Behälterverschlüssen in Eingriff gebracht werden.

## Claims

1. Transport device (10) for transporting upright containers (16) arranged in a single row, comprising:
a first clamping belt (20) and a second clamping belt (20a), between which the containers (16) arranged in a single row are held and transported,
and at least a first rotary cylinder (12) and a second rotary cylinder (14) around which the containers (16) held by the clamping belts (20, 20a) are transported,
wherein the containers (16) and the clamping belts (20, 20a) are guided around the at least two rotary cylinders (12, 14) in such a way that thereby the containers (16) are each pressed against the rotary cylinders by the radially outer clamping belt (20, 20a), and
wherein the two rotary cylinders are arranged offset to each other in the horizontal direction, and the containers are conveyed on an S-shaped transport path around the two rotary cylinders.

2. Transport device (10) according to claim 1, wherein the rotary cylinders (12, 14) and the clamping belts (20, 20a) are configured to be drivable independently of one another.

3. Transport device (10) according to any one of the preceding claims, further comprising:
a first conveyor (18) configured to convey the containers (16) in,
a second conveyor (19) configured to convey the containers (16) out downstream of the rotary cylinders (12, 14).

4. Transport device (10) according to any one of the preceding claims, wherein the transport path of the containers (16) around the rotary cylinders (12, 14) is such that in each case, in alternating sequence, the first (20) or the second clamping belt (20a) is arranged radially outwardly and presses the containers (16) against the respective rotary cylinder (12, 14).

5. Transport device (10) according to any one of the preceding claims, wherein each of the clamping belts (20, 20a) extends around at least two deflection rollers (22, 24).

6. Transport device (10) according to any one of the preceding claims, wherein both deflection rollers (22, 24) are provided with drives independent of each other.

7. Transport device (10) according to any one of the preceding claims with a compensation device comprising a compensation element (28, 28a) and a support roller (26, 26a) with which the belt length of the leading strand of each clamping belt (20, 20a) can be adjusted.

8. Transport device (10) according to any one of the preceding claims, wherein the rotary cylinders (12, 14) are constructed from a plurality of independently rotatably mounted cylinder discs, which can optionally be equipped with their own drives.

9. Transport device (10) according to any one of the preceding claims, wherein the containers (16) are held and transported between a plurality of first and second clamping belts (20, 20a) which are arranged on both sides of the container flow and vertically offset with respect to each other.

10. Transport device (10) according to any one of the preceding claims, further comprising an opening/closing device (30) with which the container closures can be engaged.

11. Method of transporting upright containers (16) arranged in a single row, comprising the steps of:
• providing a first clamping belt (20) and a second clamping belt (20a) between which the containers (16) arranged in a single row are held and transported,
• providing at least a first and a second rotary cylinder (12, 14) around which the containers (16) held by the clamping belts (20, 20a) are transported,
wherein the two rotary cylinders are arranged offset to each other in the horizontal direction, and the containers are conveyed on an S-shaped transport path around the two rotary cylinders, and
wherein the containers (16) and the clamping belts (20, 20a) are guided around the rotary cylinders (12, 14) in such a way that the containers (16) are thereby each successively pressed against the rotary cylinders (12, 14) by the radially outer clamping belt (20, 20a).

12. Method for checking the tightness of deformable filled containers, wherein the containers (16) are transported on a transport device (10) according to any one of claims 1 to 9, wherein a predetermined pressure is applied to the containers (16) by means of the clamping belts (20, 20a),
wherein the resulting internal pressure and the filling level of the containers (16) are checked by means of corresponding inspection devices.

13. Method for closure inspection of closed containers (16), wherein the containers (16) are transported on a transport device (10) according to claim 10,
wherein the containers (16) are transported between clamping belts (20, 20a) such that the container closures engage with an opening/closing device (30).

14. Method for closure inspection of closed containers (16) according to claim 13, wherein the opening/closing device (30) comprises a pair of oppositely positioned driven opening belts (34, 34a) frictionally engaged with the container closures.

## Revendications

1. Dispositif de transport (10) servant au transport de contenants (16) en position verticale disposés en une rangée, comprenant :
une première courroie de serrage (20) et une seconde courroie de serrage (20a), entre lesquelles les contenants (16) disposés en une rangée sont maintenus et transportés, ainsi qu'au moins un premier cylindre de rotation (12) et un second cylindre de rotation (14), autour desquels les contenants (16) maintenus par les courroies de serrage (20, 20a) sont transportés,
les contenants (16) et les courroies de serrage (20, 20a) étant guidés autour des au moins deux cylindres de rotation (12, 14) de telle manière que les contenants (16) sont pressés contre les cylindres de rotation dans chaque cas par la courroie de serrage (20, 20a) située radialement à l'extérieur, et
les deux cylindres de rotation étant disposés décalés l'un par rapport à l'autre dans la direction horizontale et les contenants étant convoyés autour des deux cylindres de rotation sur une voie de transport en forme de S.

2. Dispositif de transport (10) selon la revendication 1, dans lequel les cylindres de rotation (12, 14) et les courroies de serrage (20, 20a) sont réalisés de manière à pouvoir être entraînés indépendamment les uns des autres.

3. Dispositif de transport (10) selon l'une des revendications précédentes, comprenant en outre :
un premier convoyeur (18) qui est conçu pour acheminer les contenants (16), un second convoyeur (19) qui est conçu pour emmener les contenants (16) en aval des cylindres de rotation (12, 14).

4. Dispositif de transport (10) selon l'une des revendications précédentes, dans lequel la voie de transport des contenants (16) s'étend autour des cylindres de rotation (12, 14) de telle sorte que la première (20) ou la seconde courroie de serrage (20a) est dans chaque cas disposée à tour de rôle radialement à l'extérieur et presse les contenants (16) contre le cylindre de rotation (12, 14) respectif.

5. Dispositif de transport (10) selon l'une des revendications précédentes, dans lequel chacune des courroies de serrage (20, 20a) s'étend autour d'au moins deux rouleaux de renvoi (22, 24).

6. Dispositif de transport (10) selon l'une des revendications précédentes, dans lequel les deux rouleaux de renvoi (22, 24) sont pourvus d'entraînements indépendants l'un de l'autre.

7. Dispositif de transport (10) selon l'une des revendications précédentes, doté d'un système de compensation, comprenant un élément de compensation (28, 28a) et un rouleau d'appui (26, 26a), au moyen duquel la longueur de courroie de la voie aller de chaque courroie de serrage (20, 20a) peut être réglée.

8. Dispositif de transport (10) selon l'une des revendications précédentes, dans lequel les cylindres de rotation (12, 14) sont constitués de plusieurs disques de cylindre montés rotatifs indépendamment les uns des autres, qui peuvent être équipés en option de leurs propres entraînements.

9. Dispositif de transport (10) selon l'une des revendications précédentes, dans lequel les contenants (16) sont maintenus et transportés entre plusieurs premières et secondes courroies de serrage (20, 20a) disposées des deux côtés du flux de contenants et de manière décalée verticalement les unes par rapport aux autres.

10. Dispositif de transport (10) selon l'une des revendications précédentes, comprenant en outre un dispositif d'ouverture/fermeture (30) avec lequel les bouchons de contenant peuvent être amenés en prise.

11. Procédé de transport de contenants (16) en position verticale disposés en une rangée, comprenant les étapes consistant à :
• fournir une première courroie de serrage (20) et une seconde courroie de serrage (20a), entre lesquelles les contenants (16) disposés en une rangée sont maintenus et transportés,
• fournir au moins un premier et un second cylindre de rotation (12, 14), autour desquels les contenants (16) maintenus par les courroies de serrage (20, 20a) sont transportés, les deux cylindres de rotation étant disposés décalés l'un par rapport à l'autre dans la direction horizontale et les contenants étant convoyés autour des deux cylindres de rotation sur une voie de transport en forme de S, et
les contenants (16) et les courroies de serrage (20, 20a) étant guidés autour des cylindres de rotation (12, 14) de telle manière que les contenants (16) sont pressés dans chaque cas successivement contre les cylindres de rotation (12, 14) par la courroie de serrage (20, 20a) située radialement à l'extérieur.

12. Procédé de contrôle de l'étanchéité de contenants remplis déformables, les contenants (16) étant transportés sur un dispositif de transport (10) selon l'une des revendications 1 à 9,
une pression prédéfinie étant exercée sur les contenants (16) au moyen des courroies de serrage (20, 20a),
la pression intérieure qui en résulte et la hauteur de remplissage des contenants (16) étant contrôlées au moyen de systèmes d'inspection correspondants.

13. Procédé de contrôle de bouchons de contenants (16) fermés, les contenants (16) étant transportés sur un dispositif de transport (10) selon la revendication 10,
les contenants (16) étant transportés entre les courroies de serrage (20, 20a) de telle manière que les bouchons de contenant viennent en prise avec un dispositif d'ouverture/fermeture (30).

14. Procédé de contrôle de bouchons de contenants (16) fermés selon la revendication 13, dans lequel le dispositif d'ouverture/fermeture (30) comprend une paire de bandes d'ouverture (34, 34a) entraînées et disposées l'une en face de l'autre, lesquelles sont amenées en prise par friction avec les bouchons de contenant.
